(19) Europäisches Patentamt
European Patent Office
Office européen des brevets

(11) Publication number: **0 007 684**
**B1**

(12) **EUROPEAN PATENT SPECIFICATION**

(45) Date of publication of patent specification: **07.09.83**

(51) Int. Cl.[3]: **C 07 F 9/65, A 01 N 25/00**

(21) Application number: **79300946.5**

(22) Date of filing: **25.05.79**

(54) **Oxazolidinone phosphonates and their use as herbicides.**

(30) Priority: **30.05.78 US 910801**

(43) Date of publication of application:
**06.02.80 Bulletin 80/3**

(45) Publication of the grant of the patent:
**07.09.83 Bulletin 83/36**

(84) Designated Contracting States:
**BE CH DE FR GB NL**

(56) References cited:
**FR - A - 2 274 627**

(73) Proprietor: **MONSANTO COMPANY**
**Patent Department 800 North Lindbergh Boulevard**
**St. Louis, Missouri 63166 (US)**

(72) Inventor: **Gaertner, Van Russell**
**346, Sudbury Lane**
**Ballwin Missouri 63011 (US)**

(74) Representative: **Nash, Brian Walter et al,**
**Monsanto Europe S.A. Avenue de Tervuren 270-272 Letter Box No 1**
**B-1150 Brussels (BE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 007 684 B1**

Courier Press, Leamington Spa, England

# Oxazolidinone phosphonates and their use as herbicides

This invention relates to a new class of organic chemical compounds. More particularly, this invention is concerned with novel heterocyclic compounds which can generally be designated as derivatives of oxazolidin-5-one. The specific derivatives herein are those wherein an alkylene phosphonic acid aryl ester group is substituted at the nitrogen atom of the heterocyclic ring.

Belgian Patent 830,276 describes the preparation of certain oxazolidin-5-ones wherein a methylene phosphonic acid alkyl ester group is attached to the ring nitrogen. Such compounds are shown to be useful as herbicides. It has now been found that when said ring nitrogen contains an alkylene phosphonic acid aryl ester group thereon, desirable herbicidal activity is also observed.

The compounds of the present invention mav be represented by the structural formula

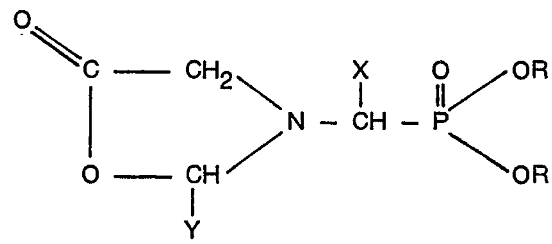

wherein R is selected from phenyl, *o*-tolyl and trifluoromethylphenyl, and X and Y are each methyl or hydrogen.

The novel compounds of the present invention can be prepared by reacting methyl or ethyl glycinate with formaldehyde or acetaldehyde, and subsequent reaction of the product with a diaryl phosphite. The molar ratio of reactants is approximately 1 glycinate: 2 aldehyde: 1 phosphite, and it has been found that the two moles of the aldehyde reactant can comprise one mole of each aldehyde, added sequentially. The glycinate and formaldehyde are reacted in accordance with the following equation:

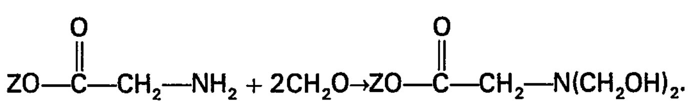

The phosphite can then be added, and it is believed that the reaction is sequential, giving off first water and then alcohol during cyclization as seen in the equation:

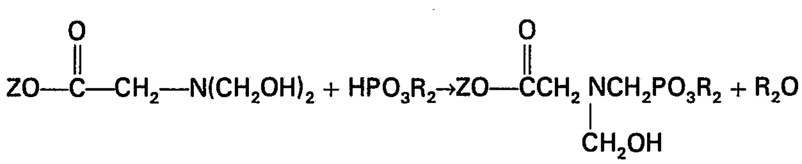

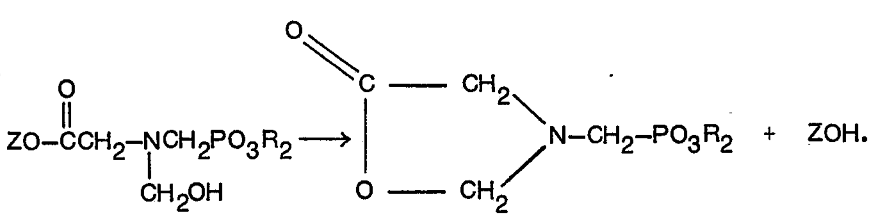

If acetaldehyde is used instead of formaldehyde, the following equation is believed to illustrate the reaction path:

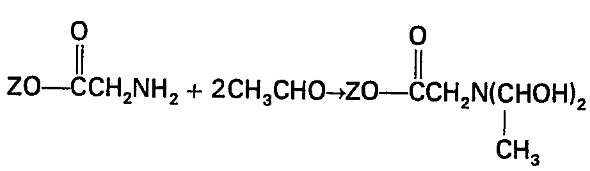

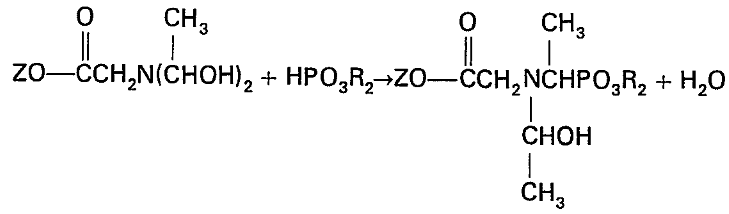

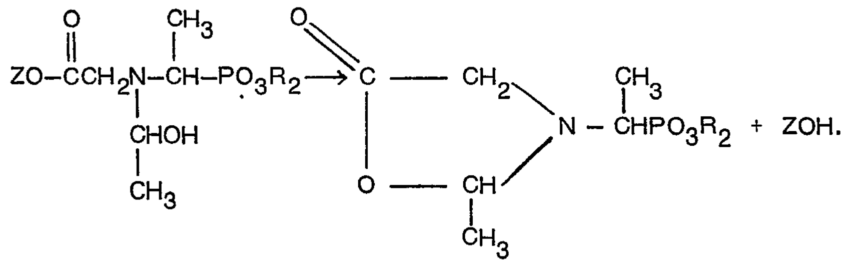

The following illustrative, non-limiting examples will serve to further demonstrate to those skilled in the art the manner in which specific compounds of this invention can be prepared. In the examples, all parts are parts by weight unless otherwise expressly stated.

Example I

A suitable reaction vessel was charged with 6.4 grams of methyl glycinate hydrochloride in 50 ml. of methanol. The solution was neutralized with 25% sodium methoxide in methanol to the phenolphthalein endpoint. The resultant methyl glycinate solution was filtered and concentrated *in vacuo* to dryness and then redissolved in 100 ml. of benzene.

To the benzene solution of methyl glycinate was added 8.0 grams of formalin (0.1 equiv. of formaldehyde slowly with constant stirring and cooling. After stirring 15 minutes, anhydrous magnesium sulfate was added to remove the water and filtered off, and then 11.7 grams of purified diphenyl phosphite was added at once. The solution was decanted from the residue and concentrated to dryness up to 50°C. *in vacuo*.

The viscous residual oil in benzene/cyclohexane was passed over a charcoal column, eluting with benzene. After about 200 ml. had been eluted, a 60 ml. sample was collected and concentrated, and the residual oil was dried for 2 hours at 56°C./ <133.3 Pa (1 mm Hg). The product, obtained as a light yellow oil, was 3-(diphenoxyphosphinylmethyl) oxazolidin-5-one, $n_D^{22}$ 1.5550. Elemental analysis gave 4.11% nitrogen and 9.24% phosphorus as against calculated values of 4.20% and 9.29% for $C_{16}H_{16}NO_5P$.

Example II

To a benzene solution of methyl glycinate, prepared as described in the preceding example, was added 4.4 grams (0.1 mole) of acetaldehyde. With stirring, the solution was cooled and then allowed to stand overnight. The solution was decanted from a little resin and then treated with 11.7 grams of purified diphenyl phosphite, stirring and maintaining a temperature below 25°C. After standing overnight the solution was concentrated to 100°C. at about 1333 Pa (10 mm Hg) to complete the reaction.

The residual oil was redissolved in benzene and passed over the charcoal column as described in the preceding example. After about 300 ml. had been eluted, a 260 ml. sample was collected and concentrated to 56°C./ <133.3 Pa (1 mm Hg). The product, obtained as a viscous amber oil, was 3-(diphenoxyphosphinyl-1-ethyl)-2-methyloxazolidin-5-one, $n_D^{22}$ 1.5507. Elemental analysis gave 59.79% carbon, 5.74% hydrogen and 8.49% phosphorus as against calculated values of 59.83%, 5.58% and 8.57% for $C_{18}H_{20}NO_5P$.

Example III

To a benzene solution of methyl glycinate, prepared as described in Example I, was added 2.1 grams (0.050 mole) of acetaldehyde with stirring and cooling at 20—25°C. After 30 minutes, 4.0 grams (0.050 mole) of formalin was added, followed 10 minutes later with 11.7 grams (0.050 mole) of diphenyl phosphite. The solution was immediately concentrated *in vacuo* and then heated to 100°C. at 133.3 Pa (1 mm Hg), leaving an amber viscous oil.

The residual oil was redissolved in benzene and passed over the charcoal column as described in the preceding examples. After about 360 ml. had been eluted, a 60 ml. sample was collected and concentrated to 56°C./<133.3 Pa (1 mm Hg). The product, obtained as a viscous amber oil, was 3-diphenoxyphosphinylmethyl)-2-methyloxazolidin-5-one, $n_D^{23}$ 1.5602. The elemental analysis gave

60.87% carbon, 5.50% hydrogen and 9.27% phosphorus as against calculated values of 58.79%, 5.22% and 8.92% for $C_{17}H_{18}NO_5P$.

Example IV

To a benzene solution of methyl glycinate, prepared as described in Example I, was added 8.0 grams of formalin at one time with stirring. After 15 minutes, anhydrous sodium sulfate was added, and the mixture was continuously stirred for 10 minutes. Then more sodium sulfate and magnesium sulfate were added.

To this slurry, 13.1 grams of di-*o*-tolyl phosphite was added, and the mixture was stirred for 15 minutes. The solution was decanted from the residue. The residue was then rinsed, adding the rinsings to the initial decantate. The combined decantates were then treated with magnesium sulfate and allowed to stand overnight.

The solution was filtered and concentrated *in vacuo* to dryness. The residue oil was then dissolved in benzene and passed over a charcoal column as described in the preceding examples. After about 420 ml. had been eluted, a 200 ml. sample was collected and concentrated to 100°C./400 Pa (3 mm Hg). The product, obtained as a viscous purple oil, was 3-(di-*o*-tolyloxyphosphinylmethyl)oxazolidin-5-one, $n_D^{23}$ 1.5526. Elemental analysis gave 60.97% carbon, 6.24% hydrogen and 8.19% phosphorus as against calculated values of 59.83%, 5.58% and 8.57% for $C_{18}H_{20}NO_5P$.

Example V

To a benzene solution of methyl glycinate, prepared as described in Example I, there was rapidly added 8.0 grams (0.1 mole) of formalin. Benzene was then added to the solution which was concentrated *in vacuo*. The residue was redissolved in benzene, twice concentrated, again redissolved in benzene, and divided into two 0.050 equivalent portions.

To one portion of the solution was added 17.3 grams (0.050 mole) of di-*m*-trifluoromethylphenyl phosphite. The solution was cooled and allowed to stand overnight. The solution was then concentrated *in vacuo* to dryness, leaving a residue oil.

This oil, in about 75 ml. of acetone with 5 grams of water, deposited colorless crystals after 3 days. The solution was filtered, the filtrate was boiled for 1 hour, filtered again, and the liquors were concentrated. The residual oil was dissolved in benzene and passed over a charcoal column as described in the preceding examples. After about 300 ml. had been eluted, 180 ml. of eluate were collected and concentrated to 56°C./ $<$133.3 Pa (1 mm Hg). The product, obtained as a turbid viscous oil, was 3-(di-*m*-trifluoromethylphenoxyphosphinylmethyl)oxazolidin-5-one, $n_D^{23}$ 1.4868. Elemental analysis gave 2.95% nitrogen and 7.15% phosphorus as against calculated values of 2.98% and 6.60% for $C_{18}H_{14}F_6NO_5P$.

In accordance with the present invention, the novel oxazolidinones possess herbicidal properties. The post-emergent or contact herbicidal activity of the various oxazolidinones of this invention was demonstrated by means of greenhouse testing, and said test was conducted as follows:

A good grade of top soil is placed in aluminum pans and compacted to a depth of 0.95 to 1.27 cm. from the top of the pan. A pre-determined number of seeds of each of several broadleaf and grassy plant species are placed on top of the soil in the pans. The seeds are covered with soil and the pans leveled. The pans are then placed on a sand bench in the greenhouse and watered from below as needed. After the specimens of the various plant species are two to three weeks old, the active ingredients are applied in spray form. The spray, a water or organic solvent-water solution or wettable powder suspension containing the appropriate amount of active ingredient to give the desired test rate and a surfactant (35 parts butylamine salt of dodecylbenzylsulfonic acid and 65 parts tall oil condensed with ethylene oxide in the ratio of 11 moles of ethylene oxide to 1 mole tall oil), is applied to the plants. The treated plants are placed in a greenhouse and unless otherwise noted approximately four weeks later the effects are observed and recorded. The results are shown in Table I in which the post-emergent herbicidal rating code is as follows:

| % Inhibition | Rating |
|---|---|
| 0—24 | 0 |
| 25—49 | 1 |
| 50—74 | 2 |
| 75—99 | 3 |
| 100 | 4 |

The plant species utilized in these tests are identified by letter in accordance with the following legend:

A — Canada Thistle
B — Cocklebur
C — Velvetleaf
D — Morningglory
E — Lambsquarter
F — Smartweed
G — Yellow Nutsedge
H — Quackgrass
I — Johnsongrass
J — Downy Brome
K — Barnyardgrass

WAT indicates the weeks after treatment.

TABLE I

| Compound | WAT | kg/ha | Plant Species A | B | C | D | E | F | G | H | I | J | K |
|---|---|---|---|---|---|---|---|---|---|---|---|---|---|
| I | 4 | 5.6 | 1 | 3 | 1 | 2 | 1 | 1 | 2 | 1 | 3 | 1 | 2 |
| | 4 | 11.2 | 2 | 3 | 4 | 3 | 4 | 3 | 3 | 4 | 4 | 3 | 4 |
| | 4 | 56.0 | 4 | 3 | 4 | 4 | 4 | 4 | 4 | 4 | 4 | 4 | 4 |
| II | 4 | 28.0 | 1 | 1 | 2 | 0 | 3 | 0 | 0 | 0 | 0 | 0 | 0 |
| | 4 | 56.0 | 1 | 0 | 0 | 0 | 0 | 0 | 0 | 0 | 0 | 0 | 0 |
| III | 4 | 5.6 | 3 | 3 | 3 | 1 | 2 | 3 | 1 | 1 | 1 | 1 | 3 |
| | 4 | 11.2 | 4 | 3 | 1 | 2 | 3 | 3 | 2 | 4 | 4 | 0 | 4 |
| | 4 | 28.0 | 4 | 2 | 4 | 1 | 1 | 2 | 2 | 2 | 3 | 3 | 3 |
| | 4 | 56.0 | 3 | 3 | 4 | 2 | 3 | 3 | 2 | 2 | 3 | 4 | 4 |
| IV | 4 | 11.2 | 1 | 1 | 1 | 1 | 0 | 1 | 0 | 0 | 0 | 0 | 1 |
| | 4 | 28.0 | 2 | 2 | 0 | 1 | 2 | 1 | 1 | 0 | 1 | 1 | 2 |
| V | 4 | 5.6 | 0 | 0 | 0 | 0 | 0 | 1 | 0 | 0 | 1 | 0 | 2 |
| | 4 | 11.2 | 1 | 1 | 0 | 0 | 1 | 0 | 1 | 0 | 0 | 0 | 3 |
| | 4 | 28.0 | 1 | 0 | 0 | 1 | 0 | 0 | 2 | 0 | 0 | 0 | 2 |

It should be noted that the compounds of this invention showed a lower level of herbicidal activity when the specified plant species were examined just two weeks after application of the active ingredient.

The herbicidal compositions, including concentrates which require dilution prior to application to the plants, of this invention usually contain from 5 to 95 parts by weight of at least one active ingredient and from 5 to 95 parts by weight of an adjuvant in liquid or solid form, for example, from 0.25 to 25 parts by weight of wetting agent, from 0.25 to 25 parts by weight of a dispersant and from 4.5 to 94.5 parts by weight of inert liquid extender, e.g., water, all parts being by weight of the total composition. Where required from 0.1 to 2.0 parts by weight of the inert liquid extender can be replaced by a corrosion inhibitor or anti-foaming agent, or both. The compositions are prepared by admixing the active ingredient with an adjuvant including diluents, extenders, carriers and conditioning agents to provide compositions in the form of finely-divided particulate solids, pellets, solutions, dispersions or emulsions. Thus the active ingredient can be used with an adjuvant such as a finely-divided solid, a liquid of organic origin, water, a wetting agent, a dispersing agent, an emulsifying agent or any suitable combination of these. From the viewpoint of economy and convenience, water is the preferred diluent.

The herbicidal compositions of this invention, particularly liquids and soluble powders, preferably contain as a conditioning agent one or more surface-active agents in amounts sufficient to render a given composition readily dispersible in water or in oil. The incorporation of a surface-active agent into

the compositions greatly enhances their efficacy. By the term "surface-active agent" it is understood that wetting agents, dispersing agents, suspending agents and emulsifying agents are included therein. Anionic, cationic and non-ionic agents can be used with equal facility.

Preferred wetting agents are alkyl benzene and alkyl naphthalene sulfonates, sulfated fatty alcohols, amines or acid amides, long chain acid esters of sodium isethionate, esters of sodium sulfosuccinate, sulfated or sulfonated fatty acid esters, petroleum sulfonates, sulfonated vegetable oils, polyoxyethylene derivatives of phenols and alkylphenols (particularly isooctylphenol and nonylphenol) and polyoxyethylene derivatives of the monohigher fatty acid esters of hexitol anhydrides (e.g., sorbitan). Preferred dispersants are methyl cellulose, polyvinyl alcohol, sodium lignin sulfonates, polymeric alkyl naphthalene sulfonates, sodium naphthalene sulfonate, polymethylene bisnaphthalenesulfonate and sodium N-methyl-N-(long chain acyl) taurates.

Water dispersible powder compositions can be made containing one or more active ingredients, an inert solid extender and one or more wetting and dispersing agents. The inert solid extenders are usually of mineral origin such as the natural clays, diatomaceous earth and synthetic minerals derived from silica and the like. Examples of such extenders include kaolinites, attapulgite clay and synthetic magnesium silicate. The water-dispersible powders of this invention usually contain from 5 to 95 parts by weight of active ingredient, from 0.25 to 25 parts by weight of wetting agent, from 0.25 to 25 parts by weight of dispersant and from 4.5 to 94.5 parts by weight of inert solid extender, all parts being by weight of the total composition. Where required, from 0.1 to 2.0 parts by weight of the solid inert extender can be replaced by a corrosion inhibitor or anti-foaming agent or both.

Emulsifiable oils are usually solutions of active ingredient in water-immiscible or partially water-immiscible solvents together with a surface active agent. Suitable solvents for the active ingredient of this invention include hydrocarbons and water-immiscible ethers, esters or ketones. The emulsifiable oil compositions generally contain from 5 to 95 parts active ingredient, 1 to 50 parts surface active agent and 4 to 94 parts solvent, all parts being by weight based on the total weight of emulsifiable oil.

Although compositions of this invention can also contain other additaments, for example, fertilizers, phytotoxicants and plant growth regulants, pesticides and the like used as adjuvants or in combination with any of the above-described adjuvants, it is preferred to employ the compositions of this invention alone with sequential treatments with the other phytotoxicants, fertilizers and the like for maximum effect. For example, the field could be sprayed with a composition of this invention either before or after being treated with fertilizers, other phytotoxicants and the like. The compositions of this invention can also be admixed with the other materials, e.g., fertilizers, other phytotoxicants, etc., and applied in a single application. Chemicals useful in combination with the active ingredients of this invention either simultaneously or sequentially include, for example, triazines, ureas, carbamates, acetamides, acetanilides, uracils, acetic acids, phenols, thiolcarbamates, triazoles, benzoic acids, nitriles and the like.

Fertilizers useful in combination with the active ingredients include, for example, ammonium nitrate, urea, potash, and superphosphate.

When operating in accordance with the present invention effective amounts of the oxazolidinones are applied to above-ground portions of plants. The application of liquid and particulate solid herbicidal compositions to above-ground portions of plants can be carried out by conventional methods, e.g., power dusters, boom and hand sprayers and spray dusters. The compositions can also be applied from airplanes as a dust or a spray because of their effectiveness at low dosages. The application of herbicidal compositions to aquatic plants is usually carried out by spraying the compositions on the aquatic plants in the area where control of the aquatic plants is desired.

The application of an effective amount of the compounds of this invention to the plant is essential and critical for the practice of the present invention. The exact amount of active ingredient to be employed is dependent upon the response desired in the plant as well as such other factors as the plant species and stage of development thereof, and the amount of rainfall as well as the specific oxazolidinone employed. In foliar treatment for the control of vegetative growth, the active ingredients are applied in amount from 1.12 to 56.0 or more kilograms per hectare. In application for the control of aquatic plants, the active ingredients are applied in amounts of from 0.1 parts per million to 1000 parts per million, based on the aquatic medium. An effective amount of phytotoxic or herbicidal control is that amount necessary for overall or selective control, i.e., a phytotoxic or herbicidal amount. It is believed that one skilled in the art can readily determine from the teachings of this specification, including examples, the approximate application rate.

**Claims**

1. A compound of the formula

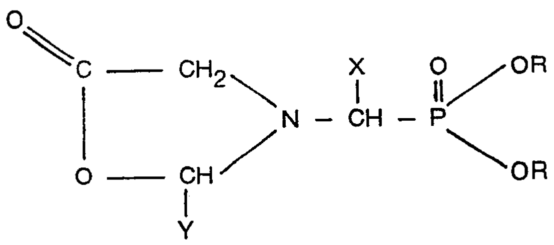

wherein R is selected from phenyl, o-tolyl and trifluoromethylphenyl and X and Y are each methyl or hydrogen.

2. A compound as defined in Claim 1 wherein R is phenyl.
3. A compound as defined in Claim 1 wherein X and Y are hydrogen.
4. A compound as defined in Claim 1 wherein Y is methyl.
5. A compound as defined in Claim 1 wherein X is hydrogen.
6. A compound as defined in Claim 3 wherein R is phenyl.
7. A compound as defined in Claim 4 wherein R is phenyl.
8. A compound as defined in Claim 7 wherein X is hydrogen.
9. A compound as defined in Claim 2 wherein X and Y are methyl.
10. A herbicidal method which comprises contacting a plant with a herbicidally effective amount of a compound of Claim 1.
11. A herbicidal method which comprises contacting a plant with a herbicidally effective amount of a compound of Claim 2.
12. A herbicidal method which comprises contacting a plant with a herbicidally effective amount of a compound of Claim 3.
13. A herbicidal method which comprises contacting a plant with a herbicidally effective amount of a compound of Claim 4.
14. A herbicidal method which comprises contacting a plant with a herbicidally effective amount of a compound of Claim 5.
15. A herbicidal method which comprises contacting a plant with a herbicidally effective amount of a compound of Claim 6.
16. A herbicidal method which comprises contacting a plant with a herbicidally effective amount of a compound of Claim 7.
17. A herbicidal method which comprises contacting a plant with a herbicidally effective amount of a compound of Claim 8.
18. A herbicidal method which comprises contacting a plant with a herbicidally effective amount of a compound of Claim 9.
19. A herbicidal composition comprising an adjuvant and a herbicidally effective amount of a compound of Claim 1.
20. A herbicidal composition comprising an adjuvant and a herbicidally effective amount of a compound of Claim 2.
21. A herbicidal composition comprising an adjuvant and a herbicidally effective amount of a compound of Claim 3.
22. A herbicidal composition comprising an adjuvant and a herbicidally effective amount of a compound of Claim 4.
23. A herbicidal composition comprising an adjuvant and a herbicidally effective amount of a compound of Claim 5.
24. A herbicidal composition comprising an adjuvant and a herbicidally effective amount of a compound of Claim 6.
25. A herbicidal composition comprising an adjuvant and a herbicidally effective amount of a compound of Claim 7.
26. A herbicidal composition comprising an adjuvant and a herbicidally effective amount of a compound of Claim 8.
27. A herbicidal composition comprising an adjuvant and a herbicidally effective amount of a compound of Claim 9.

**Revendications**

1. Composé ayant la formule:

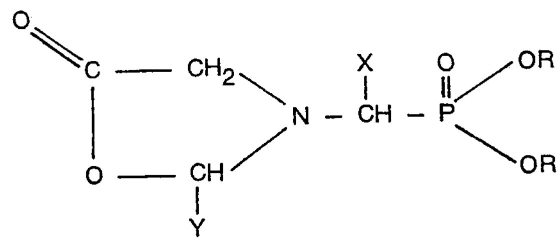

où R est choisi parmi les groupes phényle, o-tolyle et trifluorométhylphényle et X et Y représentent chacun le groupe méthyle ou l'hydrogène.

2. Composé selon la revendication 1, dans lequel R est le groupe phényle.

3. Composé selon la revendication 1, dans lequel X et Y sont l'hydrogène.

4. Composé selon la revendication 1, dans lequel Y est le groupe méthyle.

5. Composé selon la revendication 1 dans lequel X est l'hydrogène.

6. Composé selon la revendication 3 dans lequel R est le groupe phényle.

7. Composé selon la revendication 4, dans lequel R est le groupe phényle.

8. Composé selon la revendication 7 dans lequel X est l'hydrogène.

9. Composé selon la revendication 2 dans lequel X et Y sont le groupe méthyle.

10. Procédé herbicide qui consiste à mettre en contact une plante avec une quantité, efficace du point de vue herbicide, d'un composé de la revendication 1.

11. Procédé herbicide qui consiste à mettre en contact une plante avec une quantité, efficace du point de vue herbicide d'un composé de la revendication 2.

12. Procédé herbicide qui consiste à mettre en contact une plante avec une quantité, efficace du point de vue herbicide, d'un composé de la revendication 3.

13. Procédé herbicide, qui consiste à mettre en contact une plante avec une quantité, efficace du point de vue herbicide, d'un composé de la revendication 4.

14. Procédé herbicide qui consiste à mettre en contact une plante avec une quantité, efficace du point de vue herbicide, d'un composé de la revendication 5.

15. Procédé herbicide qui consiste à mettre en contact une plante avec une quantité, efficace du point de vue herbicide, d'un composé de la revendication 6.

16. Procédé herbicide qui consiste à mettre en contact une plante avec une quantité, efficace du point de vue herbicide, d'un composé de la revendication 7.

17. Procédé herbicide qui consiste à mettre en contact une plante avec une quantité, efficace du point de vue herbicide, d'un composé de la revendication 8.

18. Procédé herbicide qui consiste à mettre en contact une plante avec une quantité, efficace du point de vue herbicide, d'un composé de la revendication 9.

19. Composition herbicide comprenant un adjuvant et une quantité, efficace du point de vue herbicide, d'un composé de la revendication 1.

20. Composition herbicide comprenant un adjuvant et une quantité, efficace du point de vue herbicide, d'un composé de la revendication 2.

21. Composition herbicide comprenant un adjuvant et une quantité, efficace du point de vue herbicide, d'un composé de la revendication 3.

22. Composition herbicide comprenant un adjuvant et une quantité, efficace du point de vue herbicide, d'un composé de la revendication 4.

23. Composition herbicide comprenant un adjuvant et une quantité, efficace du point de vue herbicide, d'un composé de la revendication 5.

24. Composition herbicide comprenant un adjuvant et une quantité, efficace du point de vue herbicide, d'un composé de la revendication 6.

25. Composition herbicide comprenant un adjuvant et une quantité, efficace du point de vue herbicide, d'un composé de la revendication 7.

26. Composition herbicide comprenant un adjuvant et une quantité, efficace du point de vue herbicide, d'un composé de la revendication 8.

27. Composition herbicide comprenant un adjuvant et une quantité, efficace du point de vue herbicide, d'un composé de la revendication 9.

## Patentansprüche

1. Verbindungen der Formel

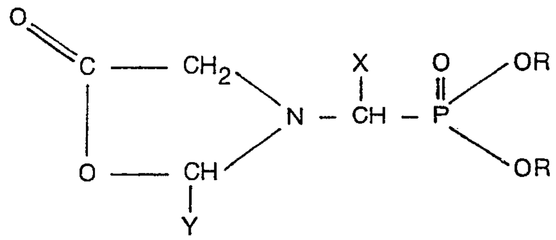

worin R aus der Phenylgruppen, o-Tolylgruppen und Trifluormethylphenylgruppen umfassenden Gruppe ausgewählt ist und X und Y jeweils Methylgruppen oder Wasserstoffatome bedeuten.

2. Verbindungen nach Anspruch 1, dadurch gekennzeichnet, daß R eine Phenylgruppe bedeutet.

3. Verbindungen nach Anspruch 1, dadurch gekennzeichnet, daß X und Y Wasserstoffatome bedeuten.

4. Verbindungen nach Anspruch 1, dadurch gekennzeichnet, daß Y eine Methylgruppe bedeutet.

5. Verbindungen nach Anspruch 1, dadurch gekennzeichnet, daß X ein Wasserstoffatom bedeutet.

6. Verbindungen nach Anspruch 3, dadurch gekennzeichnet, daß R eine Phenylgruppe bedeutet.

7. Verbindungen nach Anspruch 4, dadurch gekennzeichnet, daß R eine Phenylgruppe bedeutet.

8. Verbindungen nach Anspruch 7, dadurch gekennzeichnet, daß X ein Wasserstoffatom bedeutet.

9. Verbindungen nach Anspruch 2, dadurch gekennzeichnet, daß X und Y Methylgruppen bedeuten.

10. Unkrautbekämpfungsverfahren, dadurch gekennzeichnet, daß man eine Pflanze mit einer herbizid wirksamen Menge einer Verbindung nach Anspruch 1 in Kontakt bringt.

11. Unkrautbekämpfungsverfahren, dadurch gekennzeichnet, daß man eine Pflanze mit einer herbizid wirksamen Menge einer Verbindung nach Anspruch 2 in Kontakt bringt.

12. Unkrautbekämpfungsverfahren, dadurch gekennzeichnet, daß man eine Pflanze mit einer herbizid wirksamen Menge einer Verbindung nach Anspruch 3 in Kontakt bringt.

13. Unkrautbekämpfungsverfahren, dadurch gekennzeichnet, daß man eine Pflanze mit einer herbizid wirksamen Menge einer Verbindung nach Anspruch 4 in Kontakt bringt.

14. Unkrautbekämpfungsverfahren, dadurch gekennzeichnet, daß man eine Pflanze mit einer herbizid wirksamen Menge einer Verbindung nach Anspruch 5 in Kontakt bringt.

15. Unkrautbekämpfungsverfahren, dadurch gekennzeichnet, daß man eine Pflanze mit einer herbizid wirksamen Menge einer Verbindung nach Anspruch 6 in Kontakt bringt.

16. Unkrautbekämpfungsverfahren, dadurch gekennzeichnet, daß man eine Pflanze mit einer herbizid wirksamen Menge einer Verbindung nach Anspruch 7 in Kontakt bringt.

17. Unkrautbekämpfungsverfahren, dadurch gekennzeichnet, daß man eine Pflanze mit einer herbizid wirksamen Menge einer Verbindung nach Anspruch 8 in Kontakt bringt.

18. Unkrautbekämpfungsverfahren, dadurch gekennzeichnet, daß man eine Pflanze mit einer herbizid wirksamen Menge einer Verbindung nach Anspruch 9 in Kontakt bringt.

19. Herbizides Mittel enthaltend einen Hilfsstoff und eine herbizid wirksame Menge einer Verbindung nach Anspruch 1.

20. Herbizides Mittel enthaltend einen Hilfsstoff und eine herbizid wirksame Menge einer Verbindung nach Anspruch 2.

21. Herbizides Mittel enthaltend einen Hilfsstoff und eine herbizid wirksame Menge einer Verbindung nach Anspruch 3.

22. Herbizides Mittel enthaltend einen Hilfsstoff und eine herbizid wirksame Menge einer Verbindung nach Anspruch 4.

23. Herbizides Mittel enthaltend einen Hilfsstoff und eine herbizid wirksame Menge einer Verbindung nach Anspruch 5.

24. Herbizides Mittel enthaltend einen Hilfsstoff und eine herbizid wirksame Menge einer Verbindung nach Anspruch 6.

25. Herbizides Mittel enthaltend einen Hilfsstoff und eine herbizid wirksame Menge einer Verbindung nach Anspruch 7.

26. Herbizides Mittel enthaltend einen Hilfsstoff und eine herbizid wirksame Menge einer Verbindung nach Anspruch 8.

27. Herbizides Mittel enthaltend einen Hilfsstoff und eine herbizid wirksame Menge einer Verbindung nach Anspruch 9.